# EUROPÄISCHE PATENTANMELDUNG

(11) **EP 1 413 186 A1**
(43) Veröffentlichungstag der Anmeldung: **28.04.2004**
(21) Anmeldenummer: 03023033.8
(22) Anmeldetag: 13.10.2003
(51) Int. Cl.: A01B 33/14

(54) **Kreiselegge**

(30) Priorität: 21.10.2002 DE 10249069
(71) Anmelder: Kongskilde Howard GmbH, 84720 Michelstadt (DE)
(72) Erfinder: Kamps, Peter, 64720 Michelstadt (DE)
(74) Vertreter: Lange, Gerd, Dipl.-Ing.

(57) **Zusammenfassung**

Die Erfindung betrifft eine Kreiselegge mit mindestens einem rotierend angetriebenen Werkzeugkreisel, bestehend aus einem Zinkenträger (5) an dem ein oder mehrere Arbeitszinken befestigt sind. Es wird vorgeschlagen, die Arbeitszinken zweigeteilt auszuführen derart, daß ein unterer Arbeitsteil (6), der ein stückweit oberhalb seines Eingriffs in den zu bearbeitenden Boden endet, mit einem oberen Befestigungsflansch (7) des Arbeitszinkens auswechselbar verbunden ist, wobei der obere Befestigungsflansch (7) des Arbeitszinkens auf Dauer an dem Zinkenträger (5) des Werkzeugkreisels befestigt bleibt.

## Beschreibung

Die Erfindung betrifft eine Kreiselegge mit mindestens einem rotierend angetriebenen Werkzeugkreisel, der eine im wesentlichen vertikal ausgerichtete Kreiselwelle besitzt, die drehfest mit einem quer zur Kreiselwelle sich erstreckenden Zinkenträger verbunden ist, an dem ein oder mehrere Arbeitszinken für den Eingriff in den zu bearbeitenden Boden auswechselbar befestigt sind, wobei die Arbeitszinken einen Arbeitsteil aufweisen, der sich mit dem größten Teil seiner Zinkenlänge in den Boden hineinerstreckt, und einen Befestigungsflansch haben, der zur Befestigung des Arbeitszinkens an dem Zinkenträger dient.

Derartige Arbeitszinken sind bekannt und werden bevorzugt aus einem flachen, besonders verschleißfesten Material ausgestanzt, da sich das Flachmaterial sehr gut zu dem Arbeitsteil und dem sich daran anschließenden Befestigungsflansch verformen läßt in der Weise, daß der Befestigungsflansch in einem nahezu rechten Bogen vom Arbeitsteil abläuft und plan unter dem Zinkenträger verschraubt ist oder sandwichartig zwischen zwei Zinkenträgerplatten eingespannt ist.

Der Arbeitsteil des Arbeitszinkens besitzt eine in Kreiselrotationsrichtung vorlaufende verschleiß-gehärtete Arbeitskante, die jede Formgebung und/oder jede nacheilende Schrägstellung aufweisen kann, wie sie heute üblich sind, um das Verschleißverhalten der Arbeitskante zu verbessern sowie um eine gegen den Boden gerichtete Abweisung von im Boden vorhandenen Festkörpern/Steinen zu erreichen, damit diese sich nicht im Kopf des Werkzeugkreisels oder zwischen diesem und dem Getriebekasten des rotierend angetriebenen Werkzeugkreisels festsetzen können.

Trotz der bisher bekannt gewordenen Verbesserungen des Verschleißverhaltens der Arbeitszinken sind die Verschleißkosten pro Hektar relativ hoch. Aufgabe der Erfindung ist es, die Verschleißkosten pro Hektar bei den Kreiseleggen der beanspruchten Art zu verringern.

Diese Aufgabe wird gemäß den kennzeichnenden Merkmalen des Anspruches 1 dadurch gelöst, daß die Arbeitszinken zweigeteilt ausgeführt sind derart, daß der Arbeitsteil ein stückweit oberhalb seines Eingriffs in den zu bearbeitenden Boden endet und dort auswechselbar mit dem Befestigungsflansch des Arbeitszinkens verbunden ist, und daß der Befestigungsflansch des Arbeitszinkens an dem Zinkenträger befestigt ist oder zusammen mit diesem einstückig ausgebildet ist.

Die Lehre der Erfindung sieht vor, den Befestigungsflansch des Arbeitszinkens an dem Zinkenträger auf Dauer zu belassen und nach Erreichen der maximalen Standzeit der Arbeitskante des Arbeitsteils des Arbeitszinkens nur den Arbeitsteil des Arbeitszinkens auszuwechseln, d. h. durch einen neuen Arbeitsteil in Verbindung mit dem am Zinkenträger verbliebenen alten Befestigungsflansch zu ersetzen. Durch diese Maßnahme wird lediglich der verschlissene Arbeitsteil des Arbeitszinkens entsorgt bzw. recycled und nicht auch der an den Zwischenträger formangepaßte Befestigungsflansch des Arbeitszinkens. Das spart erhebliche Kosten, so daß in den ersten praktischen Versuchen die Verschleißkosten pro Hektar bei Kreiseleggen dieser Art bis auf 60 % der bisher üblichen Verschleißkosten gesenkt werden konnten.

Natürlich wird auch für die vorgeschlagene zweigeteilte Bauform des Arbeitszinkens der Wunsch des Anwenders festzustellen sein, nach Möglichkeit ein Arbeitszinken-Schnellwechselsystem angeboten zu bekommen, wie es in den letzten Jahren in verschiedenen Konstruktionsarten schon für die üblichen einstückigen Bauformen der Arbeitszinken verwendet wi r d.

Für die vorliegende erfindungsgemäße Bauform des Arbeitszinkens wird nach Anspruch 2 vorgeschlagen, daß der mit dem Zinkenträger auf Dauer verbundene Befestigungsflansch als formschlüssige Steckaufnahme für das obere Ende des Arbeitsteils des Arbeitszinkens ausgebildet ist, und daß das obere Ende des Arbeitsteils in der Steckaufnahme "schnellwechselbar" fixiert ist.

Beispielsweise kann dies gemäß Anspruch 3 dadurch erfolgen, daß das obere Ende des Arbeitsteils des Arbeitszinkens mittels einer handbetätigbaren Sperrverrastung in der formschlüssigen Steckaufnahme gehalten ist.

Jedoch, die montagemäßige Verbindung zwischen dem Arbeitsteil und dem Befestigungsflansch des neuen Arbeitszinkens kann auch in jeder anderen geeigneten Weise erfolgen, beispielsweise in der Verbindungsart, wie sie in Anspruch 4 dadurch gekennzeichnet ist, daß das obere Ende des Arbeitsteils des Arbeitszinkens mittels einer Ein-Schrauben-Befestigung mit dem Befestigungsflansch des Arbeitszinkens verschraubt ist, wobei ein formschlüssiger Schulteranschlag zwischen dem oberen Ende des Arbeitsteils und dem Befestigungsflansch eine zu der Ein-Schrauben-Befestigung drehfeste Verbindung zwischen den genannten Teilen sicherstellt.

Nachfolgend werden zwei Ausführungsbeispiele der Erfindung anhand der Zeichnungen näher beschrieben. Es zeigen:
- Fig. 1 und 2: eine erste Ausführungsform der Erfindung,
- Fig. 3: eine zweite Ausführungsform der Erfindung.

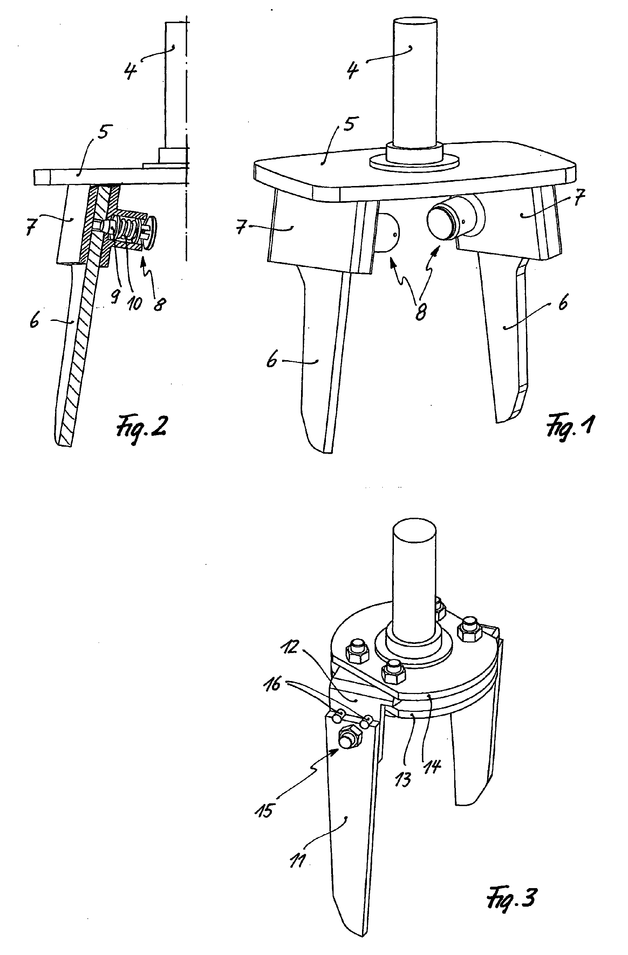

Der in den Figuren 1 und 2 perspektivisch dargestellte Werkzeugkreisel besitzt eine vertikal ausgerichtete Kreiselwelle 4, die drehfest mit dem Zinkenträger 5 verbunden ist.

Die Arbeitszinken des Werkzeugkreisels sind zweigeteilt ausgeführt und bestehen aus dem unteren Arbeitsteil 6 und der oberen Steckaufnahme 7, die fest mit dem Zinkenträger 5 verschweißt ist. Das obere Ende des Arbeitsteils 6 greift formschlüssig in die Steckaufnahme 7 ein und ist in der Steckaufnahme mittels der Sperrverrastung 8 gehalten, wie dies Fig. 2 im Querschnitt zeigt.

Die dargestellte Querverrastung besteht aus einem Sperrbolzen 9, der gegen die Kraft der Zuhaltefeder 10 darstellungsgemäß nach rechts aus seiner Ruheposition herausgezogen werden kann, in der er mittels seines konisch ausgeformten Bolzenendes in eine korrespondierende Lochbohrung in dem oberen Ende des Arbeitsteils 6 des Arbeitszinkens eingreift.

Die dargestellte Sperrverrastung ermöglicht eine Schnellwechselung des Arbeitsteils 6 des Arbeitszinkens in der Weise, daß manuell und ohne Werkzeug der Sperrbolzen 9 zurückgezogen wird, um den Arbeitsteil des Arbeitszinkens aus der Steckaufnahme zu lösen und/oder ein neues Arbeitsteil in die Steckaufnahme einzuf ühren. Eine eventuell auftretende äußere Druckbelastung auf den Sperrbolzen, die durch Festkörper/Steine bei der Bodenbearbeitung auftreten könnte, vermögen den Sperrbolzen nicht zu lösen.

Somit ist es bei einem maximalen Verschleiß (= Ende der Standzeit) der vorlaufenden Arbeitskante des Arbeitszinkens sehr einfach und sehr schnell möglich, den verschlissenen Arbeitsteil 6 des Arbeitszinkens gegen einen neuen Arbeitsteil auszutauschen, und zwar in kostengünstigster Weise, indem nur der untere Arbeitsteil 6 des Arbeitszinkens ausgewechselt wird und nicht auch der obere Teil 7.

Fig. 3 zeigt eine weitere Ausführungsform der Erfindung in einer eher traditionellen Konstruktionsart.

Der Arbeitszinken besteht hier wieder aus dem unteren Arbeitsteil 11 und dem oberen Befestigungsflansch 12, der mit einem nahezu rechten Bogen vom Arbeitsteil 11 abläuft und plan und sandwichartig zwischen zwei Zinkenträgerplatten 13 und 14 eingespannt ist.

Nach der Lehre der Erfindung endet der Arbeitsteil 11 ein stückweit oberhalb seines Eingriffes in den zu bearbeitenden Boden und ist dort auswechselbar mit dem Befestigungsflansch 12 des Arbeitszinkens verbunden. Das geschieht durch eine Ein-Schrauben-Befestigung 15 in Kombination mit den formschlüssigen Schulteranschlägen 16, so daß trotz der Verwendung nur einer Befestigungsschraube eine belastbare und drehfeste Verbindung zwischen dem unteren Arbeitsteil 11 und dem oberen Befestigungsflansch 12 des Arbeitszinkens gewährleistet ist.

## Patentansprüche

1. Kreiselegge mit mindestens einem rotierend angetriebenen Werkzeugkreisel,
- jeder Werkzeugkreisel besitzt eine im wesentlichen vertikal ausgerichtete Kreiselwelle, die drehfest mit einem quer zur Kreiselwelle sich erstreckenden Zinkenträger verbunden ist, an dem ein oder mehrere Arbeitszinken für den Eingriff in den zu bearbeitenden Boden auswechselbar befestigt sind,
- die Arbeitszinken bestehen aus einem Arbeitsteil, der sich mit dem größten Teil seiner Zinkenlänge in den Boden hineinerstreckt, und einem Befestigungsflansch, der zur Befestigung des Arbeitszinkens an dem Zinkenträger dient,
**dadurch gekennzeichnet,**
- **daß** die Arbeitszinken zweigeteilt ausgeführt sind derart,
- **daß** der Arbeitsteil (6, 11) ein stückweit oberhalb seines Eingriffs in den zu bearbeitenden Boden endet und dort auswechselbar mit dem Befestigungsflansch (7, 12) des Arbeitszinkens verbunden ist,
- und **daß** der Befestigungsflansch des Arbeitszinkens an dem Zinkenträger (5, 13/14) befestigt ist oder zusammen mit diesem einstückig ausgebildet ist.

2. Kreiselegge nach Anspruch 1,
**dadurch gekennzeichnet,**
- **daß** der Befestigungsflansch als formschlüssige Steckaufnahme (7) für das obere Ende des Arbeitsteils (6) des Arbeitszinkens ausgebildet ist.

3. Kreiselegge nach Anspruch 2,
**dadurch gekennzeichnet,**
- **daß** das obere Ende des Arbeitsteils des Arbeitszinkens mittels einer handbetätigbaren Sperrverrastung (8) in der formschlüssigen Steckaufnahme (7) gehalten ist.

4. Kreiselegge nach Anspruch 1,
**dadurch gekennzeichnet,**
- **daß** das obere Ende des Arbeitsteils (11) des Arbeitszinkens mittels einer Ein-Schrauben-Befestigung (15) mit dem Befestigungsflansch (12) des Arbeitszinkens verschraubt ist,
- wobei ein formschlüssiger Schulteranschlag (16) zwischen dem oberen Ende des Arbeitsteils und dem Befestigungsflansch eine zu der Ein-Schrauben-Befestigung drehfeste Verbindung zwischen den genannten Teilen sicherstellt.
